Europäisches Patentamt

European Patent Office

Office européen des brevets

(19)

(11) Veröffentlichungsnummer: **0 543 112 B1**

# (12) EUROPÄISCHE PATENTSCHRIFT

(45) Veröffentlichungstag der Patentschrift: **31.05.95**

(51) Int. Cl.[6]: **C02F 1/32**, C02F 1/72, A62D 3/00

(21) Anmeldenummer: **92116328.3**

(22) Anmeldetag: **24.09.92**

(54) **Verfahren zum Abbau von Schadstoffen in Wasser mittels Wasserstoffperoxid unter UV-Bestrahlung.**

(30) Priorität: **22.11.91 DE 4138421**

(43) Veröffentlichungstag der Anmeldung:
**26.05.93 Patentblatt 93/21**

(45) Bekanntmachung des Hinweises auf die
Patenterteilung:
**31.05.95 Patentblatt 95/22**

(84) Benannte Vertragsstaaten:
**AT BE CH DE DK ES FR GB GR IT LI LU NL PT SE**

(56) Entgegenhaltungen:
**US-A- 5 043 080**

**WATER RESEARCH Bd. 14, Nr. 8, 1980, OXFORD GB Seiten 1131 - 1135 MURUGANMALAIYANDI ET AL 'Removal od organics in water using hydrogen peroxide inpresence of ultraviolet light'**

(73) Patentinhaber: **DEGUSSA AG**
**Weissfrauenstrasse 9**
**D-60311 Frankfurt (DE)**

(72) Erfinder: **Schulte, Peter, Dr.**
**Centgrafenweg 10**
**W-8755 Alzenau-Hörstein (DE)**
Erfinder: **Volkmer, Michael**
**An der Pulvermühle 3b**
**W-6450 Hanau 11 (DE)**
Erfinder: **Kuhn, Frank**
**Bleichstrasse 22**
**W-6460 Gelnhausen 2 (DE)**

EP 0 543 112 B1

**Beschreibung**

Die Erfindung richtet sich auf ein Verfahren zum Abbau von Schadstoffen in Wasser mittels Hydroxylradikale bildender Verbindungen, insbesondere Wasserstoffperoxid, unter UV-Bestrahlung, insbesondere polychromatischer Strahlung im Bereich von etwa 185 bis 400 nm, in einem Durchflußreaktor, der von dem eine ausreichende Menge Wasserstoffperoxid enthaltenden schadstoffhaltigen Wasser durchströmt wird.

Es ist bekannt - siehe beispielsweise US 4,012,321 , US 4,446,029 , DE 38 36 50 A und D. Otto in Wasserkalender 1989, Seiten 134-158 -, daß sich die Oxidationswirkung von Wasserstoffperoxid dadurch kräftig steigern läßt, daß dieses in wäßriger Lösung mit monochromatischer oder polychromatischer ultravioletter Strahlung bestrahlt wird. Durch die UV-Bestrahlung zerfällt Wasserstoffperoxid in Hydroxyl-Radikale, und die im Wasser enthaltenen Schadstoffe werden durch dieses starke Oxidationsmittel abgebaut. Dieses Verfahren eignet sich zum Abbau chemisch unterschiedlichster Stoffklassen, wie etwa Kohlenwasserstoffen, Alkoholen, Ethern, Säuren, Aldehyden und Ketonen, Amino- und Halogenverbindungen, Cyaniden. Als Strahlungsquelle für monochromatische Strahlung mit Wellenlängen von beispielsweise 185, 254 und 265 nm werden meist Quecksilber-Niederdruckstrahler, für polychromatische Strahlung mit einem Wellenlängenspektrum im Bereich von etwa 185 bis 400 nm sogenannte Mittel- oder Hochdruckstrahler verwendet. Sofern dies erwünscht ist, läßt sich die Oxidationswirkung des Systems $H_2O_2$/UV-Bestrahlung durch Zugabe von Übergangsmetallionen, insbesondere Eisenionen, weiter steigern - siehe US 5,043,080.

Die Behandlung schadstoffhaltiger Wässer mittels $H_2O_2$/UV-Bestrahlung erfolgt im technischen Maßstab in Durchflußreaktoren. Bei geringer Schadstoffbelastung oder leicht abbaubaren Stoffen kann ein einmaliger Durchlauf des mit Wasserstoffperoxid versetzten Wassers durch den bestrahlten Reaktor ausreichend sein, eine hohe Schadstoffbelastung erfordert eine Prozeßführung mit Rücklauf. Es ist bekannt, daß die Eindringtiefe der Strahlung in die zu behandelnde Lösung in Abhängigkeit von der Wellenlänge der Strahlung und der Konzentration an Wasserstoffperoxid und Schadstoffen nur wenige mm bis einige cm beträgt.

Gemäß allgemeiner Lehrmeinung mußten, um in Anbetracht des aufgezeigten Absorptionsverhaltens eine befriedigende Wirkung zu erzielen, die dem Strahler nahen Flüssigkeitsschichten ständig erneuert und somit die gesamte Flüssigkeitsmenge der kurzwelligen Strahlung ausgesetzt werden. Hierzu wird in der Regel die zu behandelnde Lösung kontinuierlich mit hoher Geschwindigkeit durch einen oder mehrere hintereinandergeschaltete, meist röhrenförmige Durchfluß-UV-Reaktoren gepumpt. Im Verfahren der DE 38 36 850 A1 werden beispielgemäß Reaktoren mit einer Gesamtschichtdicke durchstrahlter Lösung von 1,65 bis 12,5 cm eingesetzt und die Strömungsgeschwindigkeit im kleinsten Querschnitt auf mindestens 0,2 m/sec eingestellt. Im Verfahren der EP 0 436 922 A2 werden um die Strahlungsquelle angeordnete rohrförmige Reaktoren eingesetzt, deren radiale Schichtdicke 0,1 bis 50 mm beträgt.

In handelsüblichen röhrenförmigen UV-Reaktoren liegt deren spezifisches Volumen meist im Bereich von 1 bis 10 l pro Kilowatt (kW) elektrischer Leistung des/der Strahler; der Durchfluß pro Stunde sollte nach Herstellerangaben stets möglichst hoch sein, um eine ideale Durchmischung zu erzielen, und beläuft sich in aller Regel auf etwa das 20- bis 50-fache des Volumens des UV-Reaktors.

Nachteilig an den vorbekannten Verfahren und handelsüblichen Reaktoren ist das Erfordernis, technisch aufwendige UV-Reaktoren verwenden zu müssen; zudem müssen die Anlagen derart ausgestaltet sein, daß sie mit hohem Durchfluß betrieben werden können, wodurch das erforderliche Investitionsvolumen weiter zunimmt. Es bestand des weiteren ein Interesse daran, bei gegebener Leistung des/der UV-Strahler und möglichst geringem apparativen Aufwand die Abbaurate an Schadstoffen im Wasser zu verbessern.

Die Aufgabe des gattungsgemäßen Verfahrens wird dadurch gelöst, daß man die Bestrahlung in einem Reaktor mit einem spezifischen Volumen von mindestens 10 l pro kW elektrischer Leistung des/der UV-Strahler durchführt, wobei der Reaktor pro Stunde von der 0,25- bis 25-fachen Menge seines Eigenvolumens an zu behandelndem Wasser durchströmt wird.

Gemäß bevorzugter Ausführungsformen des erfindungsgemäßen Verfahrens beträgt das spezifische Reaktorvolumen 20 bis 200 l/kW, besonders bevorzugt 40 bis 100 l/kW. Der UV-Reaktor wird pro Stunde vorzugsweise von der 0, 25- bis 10-fachen, insbesondere der 0,5- bis 5-fachen, und vorzugsweise von der 0,75-bis 2-fachen Menge seines Eigenvolumens an zu behandelndem Wasser durchströmt. Zur Steigerung der Kapazität und/oder der Abbaurate an Schadstoffen lassen sich in an sich bekannter Weise mehrere UV-Reaktoren, hintereinander schalten.

Im Prinzip läßt sich das Verfahren mit UV-Strahlen mit monochromatischer oder polychromatischer Strahlung realisieren, jedoch werden Strahler mit polychromatischer Strahlung mit einem UV-Spektrum im Bereich von 185 bis 400 nm deutlich bevorzugt; das gesamte Spektrum der UV-Hochdruckstrahler überstreicht im allgemeinen zusätzlich auch Bereiche des sichtbaren Lichts. Im Falle polychromatischer Strahlung von Mittel- und Hochdruckstrahlern bedarf es überraschenderweise keiner zusätzlichen Einrichtung, um die Turbulenz zwecks Durchmischung des Reaktorinhalts zu erhöhen; durch die Wärmeentwicklung derartiger Strahler wird eine ausreichende Durchmischung erreicht. Die Erwärmung selbst unterstützt den Schadstoffabbau.

Zweckmäßigerweise sind die Reaktoren zylinderförmig` wobei das jedem Strahler zuzuordnende bestrahlte Reaktorvolumen wesentlich kleiner ist als das diesem Strahler zuzuordnende Gesamtvolumen (= Reaktorvolumen pro Strahler). Der Reaktor, der einen oder mehrere Strahler in unterschiedlicher Anordnung aufweisen kann, zeichnet sich also dadurch aus, daß in ihm bestrahlte und nicht bestrahlte Volumenanteile nebeneinander vorliegen und das Verhältnis des nicht-bestrahlten zu bestrahltem Volumen, bestimmt durch die Eindringtiefe bei einer Wellenlänge von 265 nm, größer 1 und vorzugsweise größer 2, insbesondere größer 5, ist. Bei beispielsweise axialer Anordnung eines Strahlers in einem zylindrischen Behälter ist der Radius des Reaktors wesentlich größer als die Eindringtiefe der Strahlung. Auf diese Weise bedarf es keiner aufwendigen Reaktorkonstruktion, sondern die Strahler können in übliche Behälter eingebaut werden. Zudem erübrigen sich Einrichtungen zum Umwälzen des Reaktorinhalts sowie Vorrichtungen für Kreislaufführungen zwischen einem UV-Reaktor und einem Vorlage- oder Nachreaktionsbehälter; die Förderleistung der Pumpen wird lediglich der gewünschten Kapazität angepaßt.

Es wird angenommen, daß die Steigerung der Abbaurate dadurch zustande kommt, daß im Reaktor des erfindungsgemäßen Verfahrens mehrere Reaktionen parallel ablaufen, darunter (a) die Photoreaktion unter Bildung der reaktionsfähigen Hydroxyl-Radikale, (b) deren Umsetzung mit den Schadstoffen, (c) die Umsetzung von durch UV-Absorption aktivierten Schadstoffmolekülen mit Wasserstoffperoxid und (d) die Oxidation von aus der Umsetzung gemäß (b) und (c) erhaltenen Folgeprodukten mit $H_2O_2$ oder OH-Radikalen. Die verfügbare Strahlerleistung wird besser genutzt.

Das erfindungsgemäße Verfahren eignet sich zum Abbau chemisch unterschiedlicher kohlenstoffhaltiger Verbindungen, wie sie bereits einleitend erwähnt wurden. Besonders gut läßt sich Formaldehyd abbauen, wo, wie aus den Vergleichsbeispielen hervorgeht, nach dem Stand der Technik der Abbau nicht befriedigte bzw. ein größerer Aufwand betrieben werden mußte.

Der pH-Wert in der zu behandelnden Lösung wird den in ihr enthaltenden Schadstoffen durch Zugabe von Säure bzw. Basen angepaßt. Häufig wird der pH-Wert im sauren pH-Bereich liegen, jedoch sind beispielsweise beim Abbau komplexer Cyanide pH-Werte um 8-11 üblich.

Das den UV-Reaktor durchströmende zu behandelnde Wasser enthält Wasserstoffperoxid in wirksamer Menge. Die Dosierung von Wasserstoffperoxid erfolgt in an sich bekannter Weise mittels wäßriger Lösungen mit einem Gehalt zwischen 0,3 und 85 Gew.-%, insbesondere 30 bis 75 Gew.-%, wobei sich die Menge nach dem Schadstoffgehalt und dem gewünschten Schadstoffabbau richtet. Der Fachmann wird die optimale $H_2O_2$-Menge durch einen orientierenden Versuch ermitteln. Anstelle $H_2O_2$ können auch solche Verbindungen eingesetzt werden, welche in wäßriger Lösung $H_2O_2$ abspalten, etwa Natriumpercarbonat oder -perborat, oder unter UV-Bestrahlung selbst OH-Radikale bilden, etwa Peroxycarbonsäuren.

Die Temperatur kann während der erfindungsgemäßen $H_2O_2$/UV-Behandlung von etwa 5 bis etwa 95 °C, insbesondere 20 bis 90 °C, reichen. Bei schwer abbaubaren Stoffen ist eine Behandlung bei erhöhter Temperatur, wie etwa 50 bis 80 °C, meist vorteilhaft. Bei Verwendung von Mittel- und Hochdruckstrahlern kann es im Falle hohen Energieeintrags bei geringem Durchfluß gegebenenfalls zu einer zu starken Erwärmung kommen, so daß hier Maßnahmen zur Kühlung erforderlich sind, um die Temperatur unter 95 °C, besser unter 90 °C, zu halten. Bei Niederdruckstrahlern ist in aller Regel ein Konstanthalten der Temperatur im Bereich von 5 bis 30 °C erforderlich.

Das erfindungsgemäße Verfahren schließt auch die Mitverwendung von katalytisch wirksamen Übergangsmetallionen, wie insbesondere Fe-Ionen, ein. Das System $H_2O_2$/UV/Fe-Ionen zeigt bekanntlich gegenüber den Systemen $H_2O_2$/UV und $H_2O_2$/Fe-Ionen einen synergistischen Effekt. Das System $H_2O_2$/UV/Fe-Ionen macht aber in der Regel eine Abtrennvorrichtung für die resultierenden Eisenhydroxidschlämme sowie Maßnahmen zur Rückführung von Fe-Ionen oder Entsorgung der Schlämme erforderlich.

Es war nicht vorhersehbar, daß durch Maßnahmen, welche der herrschenden Meinung der Fachwelt entgegengerichtet sind - nämlich Vergrößerung des spezifischen Reaktorvolumens beziehungsweise des Verhältnisses des nicht-bestrahlten zu bestrahltem Volumen und Erniedrigung des Durchflusses - ein verbesserter Schadstoffabbau bei vermindertem apparativen Aufwand erzielt werden konnte.

Die Erfindung wird durch die folgenden Beispiele und Vergleichsbeispiele weiter verdeutlicht.

**Beispiele 1 bis 4**

Abbau von Formaldehyd in einem Wasser, das zusätzlich Ameisensäure enthält, mit Wasserstoffperoxid unter UV-Bestrahlung (Hochdrucklampe, Typ: DQ 1023 der Firma W.C. Heraeus GmbH, Hanaul. Der Schadstoffabbau erfolgt in unterschiedlich dimensionierten zylinderförmigen UV-Reaktoren, wobei der Durchfluß variiert wurde. Formaldehydkonzentration 1,3 g/l; $H_2O_2$-Zugabe bis zu einer Konzentration von 3,0 g/l; elektrische Leistung des Strahlers 1 kW, pH-Einstellung mit Ameisensäure auf 3,0; Reaktionstemperatur ca. 25 °C. Die Versuche erfolgten im Batchverfahren mit jeweils 600 l Probe. Der jeweilige UV-Reaktor war in einen Kreislauf eingebunden, der außer dem UV-Reaktor, einer Kreislaufpumpe und der Kreislaufleitung in den Beispielen 1 bis 3 einen 600 l Vorratsbehälter mit der zu behandelnden Lösung umfaßte. Behandlungsdauer 60 Minuten.

Reaktor A: Höhe 80 cm; Durchmesser 10 cm. Volumen (abzüglich Volumen der UV-Lampe) 4 l; Anordnung der Lampe: axial.

Reaktor B: Höhe 200 cm; Durchmesser 30 cm; Füllvolumen 120 l; Anordnung der Lampe: quer zur Strömung; Zufluß am unteren Abfluß am oberen Ende des Reaktors.

Reaktor C: Höhe 150 cm; Durchmesser 120 cm; Volumen 1700 l; Anordnung der Lampe: axial; Zulauf und Ablauf durch gegenüberliegende Stutzen am Fuß der Zylinderwand; Füllhöhe im Betrieb 53 cm (= 600 l). Der Kreislauf der Versuchsanordnung (Beispiel 4) enthielt keinen Vorratsbehälter.

Die Versuchsdaten folgen aus der Tabelle 1.

**Tabelle 1**

| Beispiel Nr. | Reaktor | spez. Reaktorvolumen l/kW | Durchfluß l/h (RV/h) *) | $H_2O_2$-Abbau **) mg/l | $CH_2O$-Abbau ***) mg/l |
|---|---|---|---|---|---|
| 1 | A | 4 | 600 (150) | 325 | 95 |
| 2 | B | 120 | 8500 (70,8) | 170 | 105 |
| 3 |  |  | 600 ( 5,0) | 385 | 125 |
| 4 | C | 600 | 600 (1) | 500 | 260 |

*) RV = Reaktorvolumina

**) Bestimmung mittels der Cer(IV)-sulfat-Methode

***) Bestimmung mittels der Sulfit-Methode

Gehaltsbestimmung nach Versuchsende an einer Probe aus dem 600 l Vorratsbehälter bzw. 600 l-Reaktor.

Anmerkung: Analog zu Beispiel 1 wurde bei 70°C und 2 kW-Strahlerleistung bei einem Durchfluß von 2,5 bzw. 0,4 $m^3$/h gearbeitet. Der Formaldehydabbau betrug 10 bzw. 20 %.

Beispiel 1 ist sowohl bezüglich des spezifischen Reaktorvolumens als auch des Durchflusses nicht erfindungsgemäß. Beispiel 2 ist bezüglich des Durchflusses nicht erfindungsgemäß. Im erfindungsgemäßen Beispiel 3 konnte der Formaldehydabbau gegenüber jenem in Beispiel 2 um ca. 19 %, gegenüber Beispiel 1 um 32 % gesteigert werden. Der signifikante Einfluß des vergrößerten spezifischen Volumens folgt aus dem Vergleich der Beispiele 3 und 4.

**Beispiele 5 und 6**

Die Abwasserbehandlung erfolgt in der Kreislaufanlage gemäß Beispielen 2 und 3, d. h. mit Reaktor B, jedoch mit 3 UV-Strahlern von jeweils 1 kW elektrischer Leistung; Strahleranordnung quer zur Strömung. Behandlungsdauer 2 Stunden; Formaldehydgehalt des 600 l-Batches zu Beginn 1,3 g/l, $H_2O_2$-Gehalt zu Beginn 3,0 g/l, pH 3. Die Ergebnisse folgen aus Tabelle 2. Bestimmung des $H_2O_2$- und $CH_2O$-Gehalts einer Probe aus dem Vorratsbehälter, entnommen nach Versuchsende.

Tabelle 2

| Beispiel Nr. | Durchfluß l/h (RV/h) | $H_2O_2$-Abbau mg/l | $CH_2O$-Abbau mg/l |
|---|---|---|---|
| 5 | 8500 (70,8) | 1050 | 460 |
| 6 | 300 ( 2,0) | 1710 | 680 |

Beispiel 5 ist nicht erfindungsgemäß. Durch Reduzierung des Durchflusses im Beispiel 6 konnte der Formaldehydabbau gegenüber Beispiel 5 um ca. 50 % gesteigert werden.

**Beispiele 7 bis 9**

Untersucht wurde der Formaldehydabbau im Durchlaufverfahren mit einer Kapazität von 400 l/h, wobei den Beispielen folgende Anlagesysteme zugrundelagen:

Beispiel 7: Kleiner UV-Reaktor (Länge 77 cm, Durchmesser 8 cm, effektives Volumen 3,5 l); UV-Hochdruckstrahler, 2 kW elektrische Leistung. Direkter Durchlauf mit 400 l/h aus einem Vorratsbehälter mit 600 l des mit $H_2O_2$ versetzten zu behandelnden Wassers. $CH_2O$-Bestimmung nach Verlassen des UV-Reaktors.

Beispiel 8: UV-Reaktor gemäß Beispiel 7, eingebunden in einen Kreislauf aus dem Reaktor, einem unbestrahlten Vorratsbehälter, Kreislaufleitung und Pumpe. Dem Vorratsbehälter mit 600 l zu behandelndem Wasser wurden kontinuierlich 400 l/h zu behandelndes Wasser zugeführt und die äquivalente Menge behandeltes Wasser abgezogen. Durchfluß im Kreislauf 10 m³/h.

Beispiel 9: Als UV-Reaktor diente der Vorratsbehälter des Beispiels 8 mit dem gleichen Füllgrad (600 l), dem gleichen 2 kW-Strahler; Zu- und Abfluß aus dem 600 l-UV-Reaktor je 400 l/h.

Das zu behandelnde Wasser, ein Prozeßwasser aus einer Polyolproduktion, enthielt Formaldehyd, Ameisensäure, Formiat, Methanol, einen pH-Wert von 2,5 bis 2.8 , eine Temperatur von 60 bis 70 °C. Vor Eintritt in den Reaktor (Beispiele 7 und 9) bzw. in den Vorratsbehälter (Beispiel 8) wurden 2,0 g $H_2O_2$ (als 50 gew.-%ige wäßrige Lösung) pro l Wasser zugesetzt. Die Abbaurate (% Formaldehyd) wurde im abgezogenen behandelten Wasser bestimmt.

Tabelle 3

| Beispiel Nr. | Zulauf | | Ablauf | | $CH_2O$-Abbaurate % | Temperatur C° |
|---|---|---|---|---|---|---|
| | $CH_2O$ | $H_2O_2$ | $CH_2O$ | $H_2O_2$ | | |
| 7 | 1,30 | 2,0 | 1,05 | 1,55 | 20 | 66 → 69 |
| 8 | 0,95 | 2,0 | 0,65 | 1,60 | 32 | 71 → 72 |
| 9 | 1,0 | 2,0 | 0,40 | 0,70 | 60 | 60 → 58 |

Durch die Kombination des nicht-erfinderischen Reaktors (Beispiel 7) mit einem unbestrahlten Reaktor und Kreislaufanordnung (nicht-erfindungsgemäßes Beispiel 8) konnte die Abbaurate um über 50 % erhöht werden, eine dreifach höhere Abbaurate wird aber im erfindungsgemäßen Beispiel 9 erzielt.

**Beispiel 10**

In einem Reaktor mit einem Durchmesser von 60 cm und einem Volumen von 600 l wurde Prozeßabwasser der nachstehenden Zusammensetzung im Durchlauf mit $H_2O_2$ unter UV-Bestrahlung erfindungsgemäß behandelt. Variiert wurden der Durchfluß, die $H_2O_2$-Menge und der Energieeintrag (1-5 Hochdruckstrahler je 2 kW, Typ DQ 2023 der Firma W.C. Heraeus GmbH, Hanau). Zusammensetzung des Wassers: ca. 1,6 g/l Formaldehyd, ca. 1,8 g/l Ameisensäure, 0,5 g/l Methanol, 0,01 g/l Calciumformiat; CSB-Wert ca. 3,5 g/l. Die Ergebnisse folgen aus den Tabellen 4 bis 6.

Tabelle 4

| Formaldehydabbau in Abhängigkeit vom Durchfluß und der Energieeinstrahlung bei einer $H_2O_2$-Ausgangskonzentration von 2 g $H_2O_2$/l Prozeßabwasser | | | | |
|---|---|---|---|---|
| Durchfluß ($m^3$/h) | Formaldehydabbau (%) | | | |
| | 0 kW | 2 kW | 6 kW | 10 kW |
| 0,4 | 10 | 60 | 74 | 74 |
| 0,6 | 10 | 52 | 58 | 69 |
| 0,8 | 10 | 35 | 50 | 62 |

Tabelle 5

| Formaldehyd-Abbaurate (%) bei 0,4 $m^3$/h Durchfluß, 3x2 kW HD-Strahler in Abhängigkeit von der $H_2O_2$-Konzentration | |
|---|---|
| $H_2O_2$-Konzentration (g/l) | $CH_2O$-Abbau (%) |
| 1,0 | 50 |
| 2,0 | 73 |
| 3,0 | 81 |

Tabelle 6

Hintereinanderschaltung von 2 Reaktoren (Volumen je 600 l; Durchmesser 60 cm bzw. 100 cm; Formaldehyd-Abbaurate in Abhängigkeit vom Durchfluß; $H_2O_2$-Konzentration 2 g/l; je 5x2 kW-Strahler in Reaktor 1 und 2.

| Durchfluß ($m^3$/h) | $CH_2O$-Abbau (%) | | Temperatur (°C) |
|---|---|---|---|
| | nach Reaktor 1 | nach Reaktor 2 | |
| 0,8 | 61 | 75 | 70 → 93 |
| 1,2 | 57 | 71 | 72 → 88 |
| 1,6 | 43 | 58 | 69 → 82 |

**Beispiel 11**

Beispiel 10 wurde unter Verwendung eines Reaktors mit einem Durchmesser von 100 cm wiederholt. Es ergaben sich im wesentlichen die gleichen Ergebnisse wie in Beispiel 10 - Tabelle 4 und 5.

**Patentansprüche**

1. Verfahren zum Abbau von Schadstoffen in Wasser mittels Hydroxylradikale bildender Verbindungen, insbesondere Wasserstoffperoxid, unter UV-Bestrahlung, insbesondere polychromatischer Strahlung im Bereich von 185 bis 400 nm, in einem Durchflußreaktor, der von dem eine ausreichende Menge Wasserstoffperoxid enthaltenden schadstoffhaltigen Wasser durchströmt wird,
   dadurch gekennzeichnet,
   daß man die Bestrahlung in einem Reaktor mit einem spezifischen Volumen von mindestens 10 l pro kW elektrischer Leistung des/der UV-Strahler durchführt, wobei der Reaktor pro Stunde von der 0,25- bis 25-fachen Menge seines Eigenvolumens an zu behandelndem Wasser durchströmt wird.

2. Verfahren nach Anspruch 1,
   dadurch gekennzeichnet,
   daß das spezifische Reaktorvolumen 20 bis 200 l/kW, vorzugsweise 40 bis 100 l/kW, beträgt.

3. Verfahren nach Anspruch 1 oder 2,
   dadurch gekennzeichnet,
   daß der Reaktor pro Stunde von der 0,25- bis 10-fachen, insbesondere 0,5- bis 5-fachen Menge, vorzugsweise 0,75- bis 2-fachen Menge, seines Eigenvolumens an zu behandelndem Wasser durchströmt wird.

4. Verfahren nach einem oder mehreren der Ansprüche 1 bis 3,
   dadurch gekennzeichnet,
   daß man das zu behandelnde Wasser durch mehrere hintereinander geschaltete Reaktoren strömen läßt.

5. Verfahren nach einem oder mehreren der Ansprüche 1 bis 4,
   dadurch gekennzeichnet,
   daß das zu behandelnde Wasser als Schadstoff Formaldehyd enthält.

6. Verfahren nach einem oder mehreren der Ansprüche 1 bis 5,
   dadurch gekennzeichnet,
   daß man dem zu behandelnden Wasser zusätzlich Übergangsmetallkatalysatoren, insbesondere Eisenverbindungen, zur Unterstützung der Oxidation von Schadstoffen mit Wasserstoffperoxid zusetzt.

**Claims**

1. A process for the degradation of noxious substances in water by means of compounds which form hydroxyl radicals, especially hydrogen peroxide, in combination with UV irradiation, especially polychromatic radiation in the range 185 to 400 nm, in a flow-through reactor through which the water containing noxious substances, and containing a sufficient amount of hydrogen peroxide, flows, characterized in that the irradiation is carried out in a reactor with specific volume of at least 10 l per kW of electrical power of the UV lamp(s), the hourly throughput of the reactor being 0.25 to 25 times its own volume of water to be treated.

2. A process according to Claim 1, characterized in that the specific reactor volume is 20 to 200 l/kW, preferably 40 to 100 l/kW.

3. A process according to Claim 1 or 2, characterized in that the hourly throughput of the reactor is 0.25 to 10 times, especially 0.5 to 5 times and preferably 0.75 to 2 times its own volume of water to be treated.

4. A process according to one or more of Claims 1 to 3, characterized in that the water to be treated is passed through several reactors connected in series.

5. A process according to one or more of Claims 1 to 4, characterized in that the water to be treated contains formaldehyde as a noxious substance.

6. A process according to one or more of Claims 1 to 5, characterized in that transition metal catalysts, especially iron compounds, are also added to the water to be treated, in order to increase the oxidation of noxious substances with hydrogen peroxide.

**Revendications**

1. Procédé pour la dégradation de substances nuisibles contenues dans de l'eau à l'aide de composés formant des radicaux hydroxyle, en particulier de peroxyde d'hydrogène, sous l'effet d'un rayonnement UV, en particulier de rayons polychromatiques dans la plage comprise entre 185 et 400 nm, dans un réacteur continu, traversé par l'eau contenant les substances nuisibles et une quantité suffisante de peroxyde d'hydrogène, caractérisé en qu'on réalise le rayonnement dans un réacteur présentant un volume spécifique d'au moins 10 l par kW de puissance électrique du ou des émetteurs, le réacteur étant traversé par une quantité d'eau à traiter par heure représentant 0,25 à 25 fois son volume propre.

2. Procédé selon la revendication 1, caractérisé en ce que la volume spécifique du réacteur est compris entre 20 et 200l/kW, de préférence entra 40 et 100 l/kW.

3. Procédé selon la revendication 1 ou 2, caractérisé en ce que le réacteur est traversé par une quantité d'eau à traiter par heure représentant 0,25 à 10 fois, en particulier par 0,5 à 5 fois, de manière préférée par 0,75 à 2 fois, la quantité de son volume propre.

4. Procédé selon une ou plusieurs des revendications 1 à 3, caractérisé en qu'on laisse circuler l'eau à traiter par plusieurs réacteurs disposés l'un derrière l'autre.

5. Procédé selon une ou plusieurs des revendications 1 à 4, caractérisé en que l'eau à traiter contient comme substance nuisible de formaldéhyde.

6. Procédé selon une ou plusieurs des revendications 1 à 5, caractérisé en ce qu'on ajoute en outre à l'eau à traiter des catalyseurs de métaux de transition , particulièrement des combinaisons du fer, pour soutenir l'oxydation des substances nuisibles par le peroxyde d'hydrogène.